# EUROPÄISCHE PATENTSCHRIFT

(11) **EP 3 923 422 B1**
(45) Veröffentlichungstag und Bekanntmachung des Hinweises auf die Patenterteilung: **26.08.2026**
(21) Anmeldenummer: 20000213.7
(22) Anmeldetag: 12.06.2020
(51) Int. Cl.: H01R 13/66, H01M 50/209, H01M 50/502, H01M 50/543, H01M 10/613, H01M 10/643, H01M 10/6553

(54) **KONTAKTSYSTEM MIT EINEM WECHSELSPEICHER**
CONTACT SYSTEM WITH AN INTERCHANGEABLE STORAGE DEVICE
SYSTÈME DE CONTACT AVEC STOCKAGE AMOVIBLE

(43) Veröffentlichungstag der Anmeldung: 15.12.2021
(73) Patentinhaber: Constin GmbH, 12159 Berlin (DE)
(72) Erfinder: Constien, Hans-Peter, DE-12159 Berlin (DE)
(74) Vertreter: Kayser, Christoph

(56) Entgegenhaltungen:
- EP-A1- 2 838 135
- WO-A1-2013/077176
- US-A1- 2009 214 936
- US-A1- 2011 294 000
- US-A1- 2013 089 756
- US-A1- 2015 349 554

## Beschreibung

Die vorliegende Erfindung betrifft ein Kontaktsystem mit einem Wechselspeicher mit einer ersten Kontakteinheit und mit einem Kontaktpartner des Wechselspeichers mit einer zweiten Kontakteinheit, wobei die erste Kontakteinheit und die zweite Kontakteinheit in einem Kontaktzustand lösbar ineinander gesteckt sind und in einem Trennzustand voneinander getrennt sind, wobei die erste Kontakteinheit mit dem Wechselspeicher verbunden ist, der ein Gehäuse mit einer Innenwand und einer Gehäuseaußenseite aufweist, wobei an der Gehäuseaußenseite des Wechselspeichers die erste Kontakteinheit als eine Buchse ausgebildet ist, die eine Buchsenseitenwand und einen Buchsenboden aufweist, und die zweite Kontakteinheit mit dem Kontaktpartner des Wechselspeichers verbunden ist.

Ein Kontaktsystem mit den Merkmalen des Oberbegriffs von Anspruch 1 ist aus US 2009/214936A1 bekannt. In dem Kontaktsystem des Standes der Technik ist die Kontaktplatine so verbaut, dass diese nicht einfach ausgetauscht werden kann.

Aus EP 2 938 135 A1 ist eine wiederaufladbare Batterie, aus WO 2013/077176 A1 und aus US 2011/2944000 A1 jeweils ein Batteriepacket, aus US 2013/089756 A1 und aus US2015/349554 A1 jeweils ein Batterieverbindungssystembekannt, bei denen jeweils auch die Kontaktplatine so verbaut ist, dass diese nicht einfach ausgetauscht werden kann.

Ein solches Kontaktsystem ist auch aus dem allgemeinen Stand der Technik bekannt und wird unter anderem in Wechselspeichern für elektrische Energie verwendet, um diese z.B. an elektrisch betriebenen Zweirädern anzubringen und dann mit elektrischer Energie zu versorgen. Die Kontaktsysteme sind so ausgebildet, dass solche Wechselspeicher von dem jeweiligen Zweirad entfernt und z.B. an einer räumlich entfernten Ladestation angebracht werden können, um dort wieder aufgeladen zu werden. In Verbindung mit tragbaren Wechselspeichern, die aber aktuell und perspektivisch an ganz unterschiedlichen Geräten eingesetzt werden und an Ladestationen in ganz unterschiedlicher Umgebung wieder aufgeladen werden können, ist ein besonderes Augenmerk auf das Kontaktsystem gerichtet.

Solche Kontaktsysteme sollen
- wenig Platz im Wechselspeicher einnehmen, damit möglichst viel Platz für die Aufnahme von Energiezellen verbleibt,
- robust ausgebildet sein, damit die Handhabung leicht und ohne Beschädigung der Kontakte erfolgen kann,
- räumlich geschützt liegen, um witterungsbeständig zu sein,
- einen Steckkomfort liefern, der auch unter schlechten Sichtverhältnissen eine sichere Verbindung von Kontakteinheiten zulässt,
- standardisierbar sein, und
- für Wechselspeicher verschiedener Größe und Form verwendbar sein.

Solche Wechselspeicher sollen
- innerhalb ihrer räumlichen Abmessungen optimiert sein,
- robust ausgebildet sein, damit die Handhabung leicht und ohne Beschädigung der Kontakte erfolgen kann,
- wartungsfreundlich und nachhaltig in Bezug auf den Ersatz einzelner Energiespeicher gestaltet sein;
- bequem und zuverlässig mit einem Kontaktpartner in Verbindung gebracht und von diesem gelöst werden können,
- standardisierbar sein,
- in unterschiedlichen Größen und Formen mit dem gleichen Kontaktsystem verwendbar sein, und
- in ihrem Volumen auf eine maximale Speicherkapazität optimiert sein.

Diese Anforderungen werden von bekannten Kontaktsystemen und Wechselspeichern nicht zufriedenstellend erfüllt. Die Aufgabe der vorliegenden Erfindung ist daher, ein eingangs genanntes Kontaktsystem derart weiterzubilden, dass dessen Handhabung im Umgang mit Kontaktpartnern eines Wechselspeichers einfach und dessen konstruktive Einbindung in den Wechselspeicher sicher und platzsparend möglich ist.

Die Aufgabe wird erfindungsgemäß durch Anspruch 1 gelöst.

Ein Vorteil des erfindungsgemäßen Kontaktsystems besteht darin, dass die elektrische Verbindung zwischen der Buchse und einer der Energiezellen über eine Elektroplatine hergestellt wird, die in einem Totraum oder Zwischenraum zwischen der Buchse und der Innenwand des Gehäuses des Wechselspeichers, seitlich der Buchse angebracht ist. Dadurch kann ein im Wechselspeicher nicht von Energiezellen nutzbarer Totraum optimal als Elektronikvolumen genutzt werden.

Ein weiterer Vorteil der vorliegenden Erfindung ist, dass in der Buchse eine Kontaktplatine angeordnet ist, die wenigstens ein Kontaktelement trägt. Dadurch kann eine elektrische Verbindung zwischen Elektroplatine und Kontaktelement über die Kontaktplatine als Steckverbindung hergestellt werden. Dieses vereinfacht die Montage, Wartung und Reparatur.

Ein weiterer Vorteil der vorliegenden Erfindung ist, dass die Kontaktplatine über die Elektronikplatine mit wenigstens einer im Wechselspeicher angeordneten Energiezelle elektrisch verbunden ist. Die Herstellung einer elektrischen Verbindung zwischen der Kontaktplatine und jeder der Energiezellen über die Elektronikplatine vereinfacht die für die elektrische Verbindung gewählten Strukturen. So können auch durch die Elektronikplatine Steckverbindungen hergestellt werden, die eine Montage, Wartung und Reparatur vereinfachen.

Ein weiterer Vorteil der vorliegenden Erfindung ist, dass die Elektronikplatine mit einer Verbinderplatine elektrisch verbunden ist. Dadurch ergibt sich die Möglichkeit, die an wenigstens einer Seite der Buchse angebrachte Elektronikplatine anders auszurüsten als die mit der Elektronikplatine elektrisch verbundene Verbinderplatine. Eine solche Verbinderplatine kann zum Beispiel bei einer Wartung einheitlich ausgetauscht werden oder in einem Arbeitsgang von allen Energiespeichern einheitlich gelöst werden, wenn dies erforderlich sein soll, ohne dass die Elektronikplatine an der Buchse dabei gelöst werden muss.

Zudem ist ein Vorteil der vorliegenden Erfindung, dass die Elektronikplatine eine Batterie-Management-System-Platine umfasst. Eine solche BMS-Platine kann Elektronikbauelemente umfassen, die zur Nutzung der Energiespeicher sinnvoll sind. Die Kombination aus einer Verbinderplatine und einer Batterie-Management-System-Platine (BMS-Platine) vereinfacht die Montage, die Wartung und den Austausch des mit der BMS-Platine verbundenen Steuersystems sowie den Zugang zu einzelnen Energiespeichern, die sich nicht mehr optimal steuern lassen und ersetzt werden müssen. Die Bauweise sorgt für eine größere Nachhaltigkeit in Bezug auf Wechselspeicher, da immer nur einzelne Bauelemente oder Energiezellen entsorgt bzw. ersetzt werden müssen, wenn diese nicht mehr hinreichend funktionieren.

Es ist auch ein praktischer Vorteil der vorliegenden Erfindung, dass die Kontaktplatine eine Mehrzahl von asymmetrisch angeordneten Kontaktelementen trägt. Durch die asymmetrische Anordnung der Kontaktelemente in der Buchse ist es möglich, die Anzahl der Kontaktelemente zu beschränken, wenn ein Steckkontakt in um 180° verdrehten Ausrichtungen möglich sein soll und gleichzeitig eine Kräftesymmetrie in Bezug zu einer Mittelachse herzustellen. Dadurch werden die beim Lösen und Verbinden der Steckverbindung erforderlichen Kräfte einerseits reduziert und andererseits so verteilt, dass beim Lösen keine Kippbewegung aufgrund einer wesentlich ungleichen Kraftverteilung erfolgen muss.

Zu diesem Zweck ist es besonders vorteilhaft, dass die Mehrzahl von Steckkontakten auf der Kontaktseite spiegelsymmetrisch angeordnet ist. Dadurch kann jeweils eine Gruppe von Steckkontakten auf einer Seite der Spiegelebene mit den zugeordneten Kontaktelementen in der Buchse in Kontakt gelangen, unabhängig davon, ob der Stecker in einer ersten Ausrichtung oder in einer dazu um 180° verdrehten Ausrichtung in die Buchse gesteckt wird.

Es ist zudem ein Vorteil der vorliegenden Erfindung, dass der Stecker eine erste und eine zweite Steckerführung aufweist, die jeweils einen, spiegelverkehrt zu dem anderen angeordneten Steckertransponder tragen. Auf diese Weise kann mit Hilfe des Steckertransponders die BMS-Elektronik an der BMS-Platine ausgelesen werden, unabhängig davon, ob der Stecker in einer ersten Ausrichtung oder in einer dazu um 180° verdrehten Ausrichtung in die Buchse gesteckt wird.

Ein weiterer Vorteil der vorliegenden Erfindung ist, dass eine elektrische Verbindung die Elektroplatine und eine Verbinderplatine umfasst, wobei die Verbinderplatine über jeweils eine Zellfeder mit jeweils einer Energiezelle in Verbindung steht. Dadurch ist es möglich, alle Energiezellen mit einer einzigen Verbinderplatine zu verbinden, um zum Beispiel die Montage und Wartung zu vereinfachen und auch den Austausch einzelner Energiezellen zu ermöglichen.

Weitere Vorteile des erfindungsgemäßen Kontaktsystems ergeben sich aus den weiteren Merkmalen der Unteransprüche.

Eine Ausführungsform der vorliegenden Erfindung wird im Folgenden anhand der Zeichnung näher beschrieben. Es zeigen:
Fig. 1 eine schematische Ansicht im Längsschnitt eines Wechselspeichers und eines Kontaktsystems gemäß vorliegender Erfindung;
Fig. 2 eine schematische Ansicht im Querschnitt des Wechselspeichers und des Kontaktsystems aus Fig. 1;
Fig. 3 eine schematische Schnittansicht des Wechselspeichers mit Kontaktsystem im Längsschnitt, wobei ein Stecker in eine Buchse des Kontaktsystems eingefügt ist und die Schnittebene in Abstand zur Längsachse verläuft;
Fig. 4 eine schematische Ansicht im Querschnitt des Wechselspeichers und des Kontaktsystems mit teilweise eingefügtem Stecker und mit einer Detailvergrößerung eines Energiespeichers;
Fig. 5 eine schematische Ansicht einer Kontaktseite des Steckers;
Fig. 6 eine schematische Darstellung einer Zellfeder;
Fig. 7 eine schematische Darstellung im Längsschnitt mit optimierter Anordnung von Energiezellen;
Fig. 8 eine schematische Ansicht im Querschnitt mit der optimierten Anordnung von Energiezellen aus Fig. 7 und einem Elektronikvolumen.

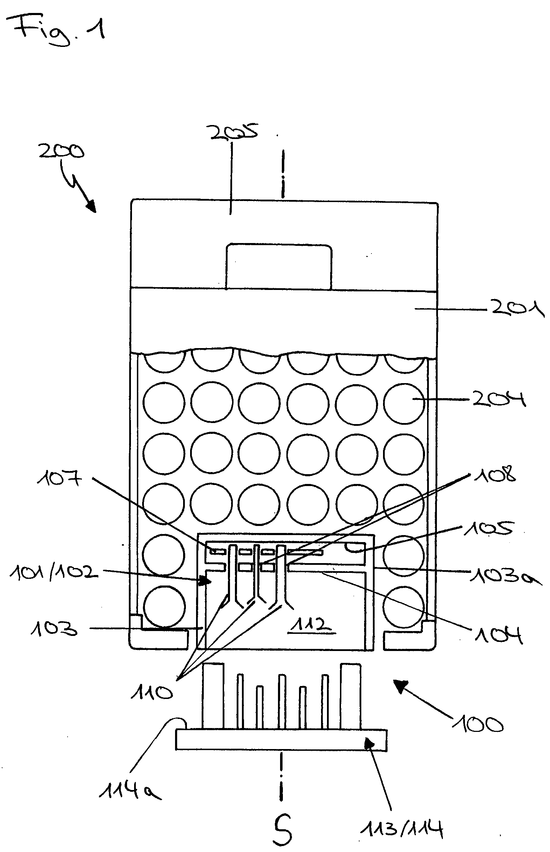

In Fig. 1 ist schematisch ein Kontaktsystem 100 und ein Wechselspeicher 200 im Längsschnitt dargestellt.

Das Kontaktsystem 100 umfasst eine erste Kontakteinheit 101 und eine zweite Kontakteinheit 113. Die erste Kontakteinheit 101 ist als Buchse 102 ausgebildet. Die zweite Kontakteinheit 113 ist als Stecker 114 ausgebildet. Die Buchse 102 umfasst eine Buchsenseitenwand 103 und einen Buchsenboden 104. In Abstand hinter dem Buchsenboden 104 ist eine Rückwand 105 eingefügt, die einen räumlichen Abschluss bildet und im Wesentlichen parallel zum Buchsenboden 104 ausgerichtet ist. In anderen Ausführungsformen kann auf die Rückwand 105 ganz verzichtet werden. Der Buchsenboden 104 ist mit der Buchsenseitenwand 103 verbunden. Zwischen dem Buchsenboden 104 und der Rückwand 105 ist in der vorliegenden Ausführungsform eine Kontaktplatine 107 angeordnet. Diese kann am äußeren Buchsenboden 104 über eine Steckverbindung angebracht sein. In anderen Ausführungsformen kann auf eine Kontaktplatine 107 verzichtet werden und eine elektrische Verbindung durch Kabel hergestellt werden. Im Buchsenboden 104 sind in der vorliegenden Ausführungsform drei Kontaktdurchgangsöffnungen 108 ausgebildet. In anderen Ausführungsformen können weniger oder mehr Kontaktdurchgangsöffnungen 108 ausgebildet sein. Die Kontaktdurchgangsöffnungen 108 sind im Buchsenboden 104 asymmetrisch angeordnet, d.h., in der Mitte des Buchsenbodens 104, jeweils an einer sich gegenüberliegenden Seite in der Nähe der Buchsenseitenwand 103 und zwischen der Mitte und einer der beiden Seiten. Im Querschnitt befinden sich also die Kontaktdurchgangsöffnungen 108 in der Mehrzahl auf einer Hälfte von der Mitte aus. Die Kontaktplatine 107 trägt in der vorliegenden Ausführungsform drei Kontaktelemente 110, die in der vorliegenden Ausführungsform als Kontaktfedern ausgebildet sind. In anderen Ausführungsformen können zudem auch mehr oder weniger Kontaktelemente 110 vorhanden sein, die in jeweilige Kontaktdurchgangsöffnungen 108 hineinreichen oder nicht. Wenigsten einige der Kontaktelemente 110 erstrecken sich von der Kontaktplatine 107 in die jeweilige Kontaktdurchgangsöffnung 108 und sind dort fest angeordnet.

Die zweite Kontakteinheit 113, d.h., der Stecker 114, weist an einer Kontaktseite 114a zwei Steckerführungen 115a, 115b sowie drei Steckkontakte 116a, 116b und 116c auf. In anderen Ausführungsformen können mehr oder weniger Steckkontakte 116a, 116b, 116c vorhanden sein. Die Anzahl der Steckkontakte 116a, 116b, 116c ist nicht beschränkt. In der vorliegenden Ausführungsform ist die Anzahl der Steckkontakte 116a, 116b, 116c durch die Anzahl der Kontaktdurchgangsöffnungen beschränkt. In anderen Ausführungsformen können auch die Steckerführungen 115a, 115b anders ausfallen und/oder in anderer Zahl vorliegen.

Die Steckkontakte 116a, 116b, 116c umfassen wenigstens einen Hauptkontakt und wenigstens eine - in der Regel mehrere - Zusatzkontakte auf.

Die Anordnung der Kontaktdurchgangsöffnungen 108 bzw. der Kontaktelemente 110 erfolgt in der vorliegenden Ausführungsform so, wie bereits vorstehend beschrieben, dass ein Kontakt zwischen der ersten Kontakteinheit 101 und der zweiten Kontakteinheit 113 nur in einer Hälfte des Buchsenraums 112 hergestellt wird. In der vorliegenden Ausführungsform sind die Steckkontakte 116a, 116b, 116c und die Steckerführungen 115a, 115b auf der Kontaktseite 114a spiegelsymmetrisch zueinander angeordnet. Eine Spiegelebene S fällt mit einer Mittelebene zusammen, so dass eine Gruppe von Steckkontakten 116a, 116b und eine Steckerführung 115a auf einer Hälfte der Kontaktseite 114a und eine andere Gruppe von Steckkontakten 116a, 116b und eine Steckerführung 115b spiegelverkehrt auf der anderen Hälfte der Kontaktseite 114a liegen. Der Steckkontakt 116c liegt zentral in der Mitte. Durch diese Anordnung gelangen immer einige der Steckkontakte 116a, 116b, 116c und beide Steckerführungen 115q, 115b in eine Wirkverbindung mit den komplementären Bauteilen der Buchse 102, während die anderen Steckkontakte funktionslos bleiben. Bei Drehung des Steckers 114 um 180° kommen die jeweils anderen Steckkontakte 116a, 116b, 116c und die Steckerführungen 115a, 115b in eine Wirkverbindung mit den komplementären Bauteilen der Buchse 102, während die anderen Steckkontakte funktionslos bleiben.

Dadurch wird sichergestellt, dass der Stecker 114 in der einen und der anderen, um 180° gedrehten Ausrichtung in der Buchse 102 verwendet werden kann. Es gibt also zwei bevorzugte Ausrichtungen, die dem Benutzer aufgrund z.B. einer rechteckigen Umfangsgeometrie der Buchse 102 und des Steckers 114 nahegelegt werden.

Der Wechselspeicher 200 weist ein Gehäuse 201 auf, dessen Innenwand 202 einen Innenraum 203 umschließt, in dem eine Mehrzahl von Energiezellen 204 angeordnet sind. Das Gehäuse 201 hat einen Griff 205, der an einer Oberseite 206 des Gehäuses 201 ausgeformt ist. In anderen Ausführungsformen kann der Griff 205 auch an einer anderen beliebigen Stelle angeordnet oder auch an das Gehäuse 201 angefügt sein.

Die erste Kontakteinheit 101 ist an bzw. in einer Unterseite 207 des Wechselspeichers 200 angeordnet. Die Energiezellen 204 sind im Innenraum 203 zwischen der Oberseite 206 und der Unterseite 207 angeordnet und erstrecken sich in der vorliegenden Ausführungsform über drei Seiten um die Buchse 102 herum.

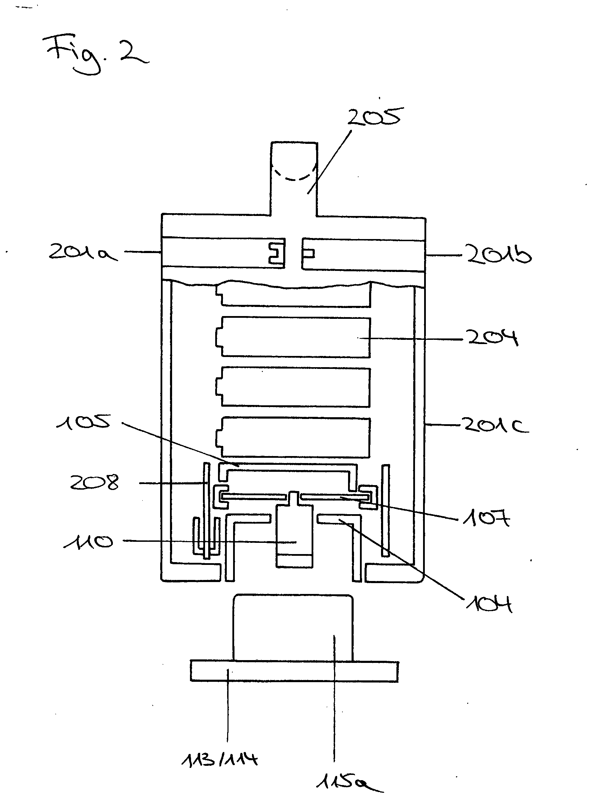

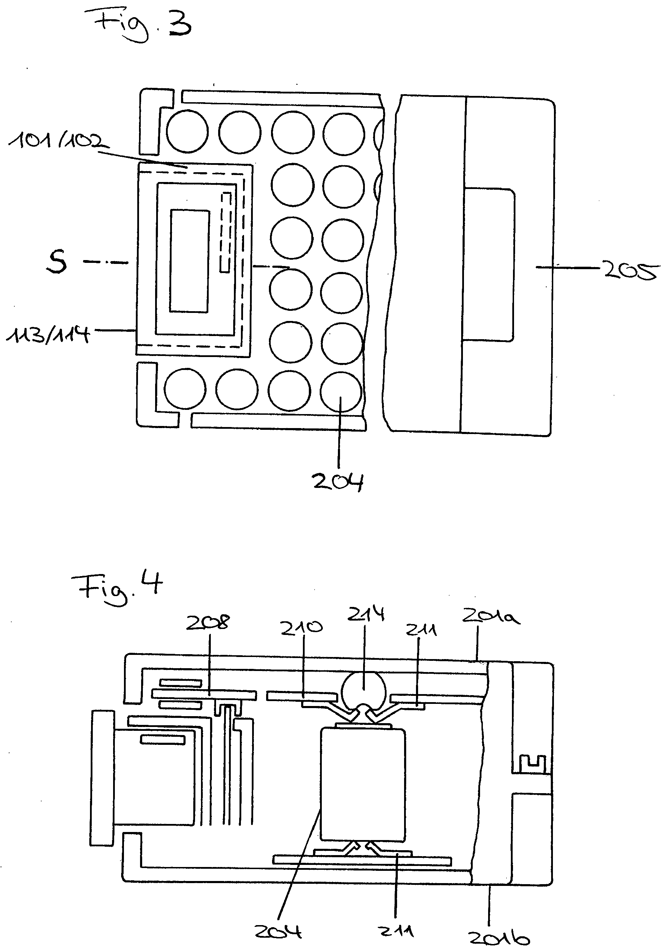

In Fig. 2 ist das Kontaktsystem 100 und der Wechselspeicher 200 aus Fig. 1 im Querschnitt dargestellt. In dieser Figur geht es primär um das Kontaktsystem 100, so dass nicht alle Details des Wechselspeichers 200 dargestellt sind. Details zum Wechselspeicher 200 und den Energiezellen 204 ergeben sich aus Fig. 4.

An einer Außenwand 103a der Buchse 102 ist eine Batterie-Management-System-Platine (BMS-Platine) 208 angebracht. Diese BMS-Platine 208 kann nur auf einer Seite, aber auch auf beiden Seiten der Buchse 102 angeordnet sein. Dies ist in Fig. 2 so dargestellt. Die BMS-Platine 208 erstreckt sich im Wesentlichen parallel zu einer Mittelachse des Wechselspeichers 200 und somit im Wesentlichen parallel zur Buchsenseitenwand 103. Die BMS-Platine 208 ist mit BMS-Elektronik 209a, 209b bestückt.

In Fig. 2 ist dargestellt, dass die BMS-Elektronik 209a, 209b sowohl oberhalb als auch unterhalb der BMS-Platine 208 angebracht ist. Die Buchsenseitenwand 103 endet fluchtend an der Unterseite 207 des Gehäuses 201 des Wechselspeichers 200. Der Stecker 114 passt mit seiner ersten und zweiten Steckerführung 115a, 115b in den Buchsenraum 112 und jeweils einer der Steckkontakte 116a, 116b, 116c einer Gruppe passt in jeweils einen der Kontaktdurchgangsöffnungen 108, so dass im zusammengesteckten Kontaktzustand ein fester Steckkontakt hergestellt ist. Im Kontaktzustand sind aufgrund der asymmetrischen Anordnung der Kontaktdurchgangsöffnungen 108 nicht alle Steckkontakte 116a, 116b, 116c in einer Wirkverbindung mit den Kontaktelementen 110, 111. Eine Gruppe von Steckkontakten 116a, 116b, 116c bleibt ohne Kontaktpartner.

In Bezug auf den Wechselspeicher 200 ist zu erkennen, dass im Innenraum 203 die Energiezellen 204 parallel zueinander und in mehreren Reihen übereinander angeordnet sind. In anderen Ausführungsformen kann die Anordnung auch parallel aber versetzt zueinander gewählt sein oder aufgrund ihrer Form (flach) liegend angeordnet sein. Die in Fig. 2 dargestellten Energiezellen 204 können in anderen Ausführungsformen auch andere Geometrien, Abmessungen und/oder Größen haben und auch in größerer Zahl übereinander und/oder nebeneinander angeordnet sein, als dies dargestellt ist. Insgesamt ist die Gestaltung der Energiezelle, die Größe und Anzahl der Energiezelle und die Anordnung der Energiezellen immer abhängig von der jeweiligen Anwendung und dem gewünschten Zweck. Die Gestaltung, Größe, Anzahl und Anordnung sind in der vorliegenden Ausführungsform nur zur vereinfachten Darstellung so gewählt, wie dargestellt, und nicht darauf beschränkt.

Das Gehäuse 201 des Wechselspeichers 200 wird in der vorliegenden Ausführungsform aus einer Oberschale 201a und einer Unterschale 201b gebildet, die unterhalb des Griffs 205 miteinander verschraubt sind. In anderen Ausführungsbeispielen können Oberschale 201a und Unterschale 201b auch in anderer Weise miteinander fest, aber lösbar verbunden sein. Durch Lösung der Verbindung und Abnahme der Oberschale 201a wird ein Zugang zu den Energiezellen 204 und zu dem Kontaktsystem 200 ermöglicht. In anderen Ausführungsformen kann das Gehäuse 201 auch beliebig anders ausgebildet sein, z.B. als rechteckiges oder rundes Rohrstück mit Endverschlüssen, die an einer Endseite die Buchse und an der anderen Endseite den Griff aufweisen.

In Fig. 3 ist in einem Längsschnitt, aber in einer anderen Schnittebene als in Fig. 1, dargestellt, wie der Stecker 114 im Kontaktzustand in der Buchse 102 sitzt, wenn also ein Kontakt zwischen dem Wechselspeicher 200 und einem Kontaktpartner, an dem der Stecker 114 angeordnet ist, hergestellt ist. Die BMS-Elektronik 209a, die auf der BMS-Platine 208 oben angebracht ist, liegt der Innenwand 202 des Wechselspeichers 200 zugewandt.

In Fig. 4 ist im Querschnitt schematisch dargestellt, dass an der ersten und zweiten Steckerführung 115a, 115b ein Steckertransponder 118a, 118b angebracht ist. In anderen Ausführungsformen muss ein Steckertransponder 118a, 118b nicht zwingend vorhanden sein. Es ist allerdings möglich, dass der Steckertransponder 118a, 118b, wie in der vorliegenden Ausführungsform, mit der BMS-Elektronik 209b korrespondiert, die auf der BMS-Platine 208 unten angebracht ist. Die BMS-Elektronik 209b an der Unterseite der BMS-Platine 208 kann einen Speicher/Sender aufweisen, so dass der Steckertransponder 118a, 118b Signale von der BMS-Elektronik 208 auslesen kann. Dadurch kann Information zur Identifikation, Benutzung, zum Zustand, aber auch zur Lokalisierung eines Wechselspeichers 200 ausgetauscht werden.

In Fig. 3 ist mit Bezug auf den Wechselspeicher 200 für eine Energiezelle 204 beispielhaft dargestellt, wie diese mit einer Verbinderplatine 210 in Kontakt gehalten wird. Zwischen der Energiezelle 204 und jeder anderen Energiezelle 204, die nicht dargestellt ist, und der Verbinderplatine 210 ist eine tellerförmige Zellfeder 211 angeordnet. Die tellerförmige Zellfeder 211 weist eine Mehrzahl von gebogenen Federarmen 212 auf, die eine elektrisch leitende Verbindung zu der jeweiligen Verbinderplatine 210 herstellen und gleichzeitig einen Druckkontakt zwischen der Verbinderplatine 210 und jeder Energiezelle 204 herstellen. In anderen Ausführungsformen kann die tellerförmige Zellfeder 211 auch durch beliebige andere Federelemente ersetzt werden, die gleich oder zumindest ähnliche Funktionen erfüllen können.

Zwischen der Zellfeder 211 bzw. zwischen jeder Zellfeder 211 und der Innenwand 202 des Gehäuses 201 ist in der vorliegenden Ausführungsform auch ein Wärmebrückenelement 214 angeordnet, um Wärme abzuleiten, die im Kontaktbereich zwischen Energiezelle 204, Zellfeder 211 und Verbinderplatine 210 entwickelt wird. Das Wärmebrückenelement 214 unterstützt auch die feste Verbindung zwischen der Zellfeder 211, der Verbinderplatine 210 und der jeweiligen Energiezelle 204, indem diese zwischen der Innenwand 202 und dem Kontaktbereich etwas Druckspannung erzeugt. Das Wärmebrückenelement 214 ist lösbar angebracht, so dass diese bei der Abnahme der Oberschale 201a aus dem Kontaktbereich entnommen werden kann, um auch die Verbinderplatine 210 und die Zellfeder 211 entnehmen zu können und an die Energiespeicher 204 zu gelangen.

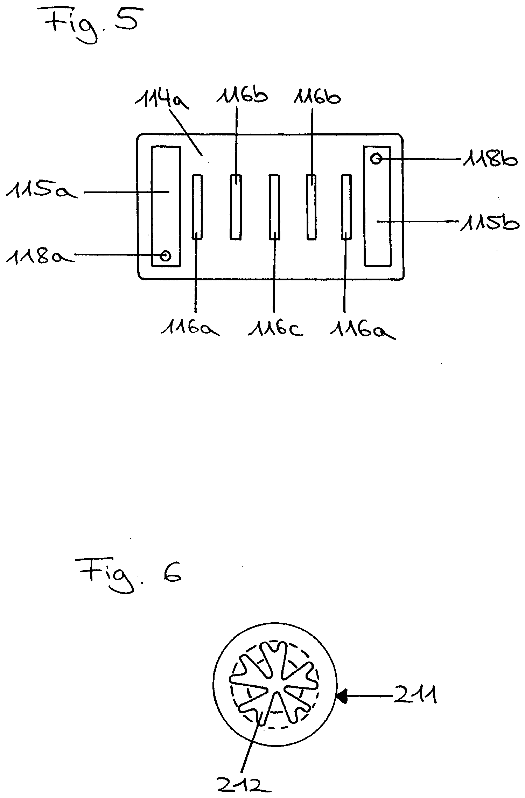

In Fig. 5 ist eine schematische Ansicht der Kontaktseite 114a des Steckers 114 dargestellt. Die Kontaktseite 114a weist eine Spiegelachse S auf, an der zwei Hälften der Kontaktseite 114a gespiegelt sind, so dass jeweils eine erste Gruppe von Steckkontakten 116a, 116b und die erste Steckerführung 115a auf der einen Hälfte und eine zweite Gruppe von Steckkontakten 116a, 116b und die zweite Steckerführung 115b auf der zweiten Hälfte gespiegelt angeordnet sind. Der Steckkontakt 116c befindet sich im Zentrum der Kontaktseite 114a.

Die in Fig. 4 dargestellten Steckertransponder 118a, 118b befinden sich entsprechend an den beiden gespiegelten Steckerführungen 115a, 115b auf entgegengesetzten Seiten. Durch diese Konstruktion ist es möglich, den Stecker 114 in zwei um 180° gedrehte Ausrichtungen zu nutzen.

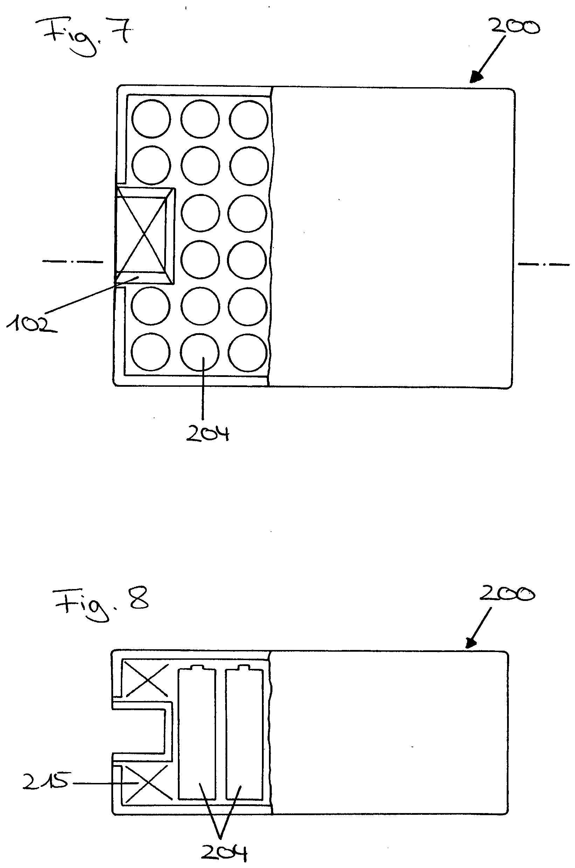

Schließlich ist in Fig. 7 und Fig. 8 dargestellt, wie ein Totraum 215 im Wechselspeicher 200 als Elektronikvolumen genutzt werden kann. Die optimale Anpassung eines Wechselspeichers 200 an die im Innenraum 203 angeordneten Energiezellen 204 und die optimale Ausbildung der Buchse 102 in der Unterseite 207 des Gehäuses 201 führt dazu, dass sich im Querschnitt (Fig. 8) beidseitig der Buchse 102 der nicht mit Energiezellen 204 nutzbare Totraum 215 ergibt, der für die Elektronikplatine bzw. BSM-Platine 208 und die damit bestückte BSM-Elektronik 209a, 209b genutzt werden kann, wie das zum Beispiel auch in Fig. 2 und Fig. 4 dargestellt ist. Dadurch ist die Elektronik störungsfrei und wartungsfreundlich angeordnet.

Durch die Konstruktion des Wechselspeichers 200 mit einer Oberschale 201a und einer Unterschale 201b, die lösbar miteinander verbunden sind und eine Gehäuseaußenseite 201c bilden, ist es möglich, die Oberschale 201a zu entfernen. Dadurch werden die Verbinderplatine 210 und die BMS-Platine 208 freigelegt. Das Wärmebrückenelement 214, die Verbinderplatine 210 und die Zellfedern 211 können entnommen werden, so dass die Energiezellen 204 freiliegen. Es können dann die Energiezellen 204 einzeln entnommen und geprüft werden und ggf. nur die Energiezellen 204 ersetzt werden, die nicht mehr richtig funktionieren. Dadurch wird der Betrieb des erfindungsgemäßen Wechselspeichers 200 nachhaltiger.

Ebenso kann der leichte Zugang an der BMS-Platine 208 eine Wartung, einen Austausch oder eine Reparatur an der BMS-Elektronik 209a, 209b auf einfache Weise ermöglichen. Nach der Wartung, Reparatur oder nach dem Austausch einzelner Bauteile können die Bauteile in umgekehrter Reihenfolge wieder zusammengesetzt werden, so dass nach Verbindung der Oberschale 201a mit der Unterschale 201b der Wechselspeicher mit dem Kontaktsystem wieder einsatzfähig ist.

### Bezugszeichenliste

- 100: Kontaktsystem
- 101: erste Kontakteinheit
- 102: Buchse
- 103: Buchsenseitenwand
- 103a: Außenwand
- 104: Buchsenboden
- 105: Rückwand
- 107: Kontaktplatine
- 108: Kontaktdurchgangsöffnung
- 110: Kontaktelement
- 112: Buchsenraum
- 113: zweite Kontakteinheit
- 114: Stecker
- 114a: Kontaktseite
- 115a: erste Steckerführung
- 115b: zweite Steckerführung
- 116a: erster Steckkontakt
- 116b: zweiter Steckkontakt
- 116c: dritter Steckkontakt
- 118a: erster Steckertransponder
- 118b: zweiter Steckertransponder
- 200: Wechselspeicher
- 201: Gehäuse
- 201a: Oberschale
- 201b: Unterschale
- 201c: Gehäuseaußenseite
- 202: Innenwand
- 203: Innenraum
- 204: Energiezelle
- 205: Griff
- 206: Oberseite
- 207: Unterseite
- 208: BMS-Platine
- 209a: obere BMS-Elektronik
- 209b: untere BMS-Elektronik
- 210: Verbinderplatine
- 211: Zellfeder
- 212: Federarme
- 214: Wärmebrückenelement
- 215: Totraum
- S: Spiegelebene

## Patentansprüche

1. Kontaktsystem (100) mit einem Wechselspeicher (200) mit einer ersten Kontakteinheit (101) und mit einem Kontaktpartner des Wechselspeichers mit einer zweiten Kontakteinheit (113), wobei die erste Kontakteinheit (101) und die zweite Kontakteinheit (113) in einem Kontaktzustand lösbar ineinander gesteckt sind und in einem Trennzustand voneinander getrennt sind, wobei die erste Kontakteinheit (101) mit dem Wechselspeicher (200) verbunden ist, der ein Gehäuse (201) mit einer Innenwand (202) und einer Gehäuseaußenseite (201c) aufweist, wobei an der Gehäuseaußenseite (201c) des Wechselspeichers (200) die erste Kontakteinheit (101) als eine Buchse (102) ausgebildet ist, die eine Buchsenseitenwand (103) und eine Buchsenboden (104) aufweist, und die zweite Kontakteinheit (113) mit dem Kontaktpartner des Wechselspeichers (200) verbunden ist, wobei das Gehäuse (201) durch eine Oberschale (201a) und eine Unterschale (201b) gebildet wird, die lösbar miteinander verbunden sind und die Innenwand (202) eine Innenseite der Gehäuseaußenseite (201c) ausbildet, und wobei in dem Gehäuse (201) wenigstens eine Energiezelle (204) angeordnet ist, wobei zwischen der wenigstens einen Energiezelle (204) und der ersten Kontakteinheit (101) eine elektrische Verbindung besteht, **dadurch gekennzeichnet, dass** eine Elektronikplatine (208; 210) zum elektrischen Steuern des Wechselspeichers (200) in einem energiezellenfreien Totraum (215) zwischen der Buchsenseitenwand (103) und der Innenwand (202) des Gehäuses (201) angebracht ist.

2. Kontaktsystem nach Anspruch 1,
**dadurch gekennzeichnet,**
**dass** in der Buchse (102) eine Kontaktplatine (107) angeordnet ist, die wenigstens ein Kontaktelement (110) trägt.

3. Kontaktsystem nach Anspruch 2,
**dadurch gekennzeichnet,**
**dass** die Kontaktplatine (107) über die Elektronikplatine (208; 210) mit wenigstens einer im Wechselspeicher (200) angeordneten Energiezelle (204) elektrisch verbunden ist.

4. Kontaktsystem nach einem der Ansprüche 1 bis 3,
**dadurch gekennzeichnet,**
**dass** die Elektronikplatine (208; 210) mit einer Verbinderplatine (210) elektrisch verbunden ist.

5. Kontaktsystem nach einem der Ansprüche 1 bis 4,
**dadurch gekennzeichnet,**
**dass** die Elektronikplatine (208; 210) eine Batterie-Management-System-Platine (208) umfasst.

6. Kontaktsystem nach Anspruch 5,
**dadurch gekennzeichnet,**
**dass** die Batterie-Management-System-Platine (208) wenigstens eine Batterie-Management-System-Elektronik (209a; 209b) trägt.

7. Kontaktsystem nach einem der Ansprüche 2 bis 6,
**dadurch gekennzeichnet,**
**dass** die Kontaktplatine (107) eine Mehrzahl von asymmetrisch angeordneten Kontaktelementen (110) trägt.

8. Kontaktsystem nach wenigstens einem der Ansprüche 2 bis 7,
**dadurch gekennzeichnet,**
**dass** in einem Buchsenboden (104) wenigstens eine Kontaktdurchgangsöffnung (108) ausgebildet ist, in der das wenigstens eine Kontaktelement (110) angebracht.

9. Kontaktsystem nach einem der vorstehenden Ansprüche,
**dadurch gekennzeichnet,**
**dass** die zweite Kontakteinheit (113) einen Stecker (114) bildet, der eine Kontaktseite (114a) mit einer Mehrzahl von Steckkontakten (116a; 116b; 116c) aufweist.

10. Kontaktsystem nach Anspruch 9,
**dadurch gekennzeichnet,**
**dass** die Mehrzahl von Steckkontakten (116a; 116b; 116c) auf der Kontaktseite (114a) spiegelsymmetrisch angeordnet sind.

11. Kontaktsystem nach Anspruch 9 oder 10,
**dadurch gekennzeichnet,**
**dass** der Stecker (114) eine erste und eine zweite Steckerführung (115a; 115b) aufweist, die jeweils einen, spiegelverkehrt zu dem anderen angeordneten Steckertransponder (118a; 118b) tragen.

12. Kontaktsystem nach einem der vorstehenden Ansprüche,
**dadurch gekennzeichnet,**
**dass** die elektrische Verbindung eine Elektroplatine (208) und eine Verbinderplatine (210) umfasst, wobei die Verbinderplatine (210) über jeweils eine Zellfeder (211) mit jeweils einer Energiezelle (204) in Verbindung steht.

13. Kontaktsystem nach einem der vorstehenden Ansprüche,
**dadurch gekennzeichnet,**
**dass** die Elektroplatine (208; 210) eine Batterie-Management-System-Platine (208) ist.

14. Kontaktsystem nach Anspruch 13,
**dadurch gekennzeichnet,**
**dass** die Batterie-Management-System-Platine (208) wenigstens eine Batterie-Management-System-Elektronik (209a; 209b) trägt.

15. Kontaktsystem nach einem der vorstehenden Ansprüche,
**dadurch gekennzeichnet,**
**dass** die Buchse (102) an einer Unterseite (207) des Gehäuses (201) ausgebildet ist.

## Claims

1. A contact system (100) having a removable storage device (200) with a first contact unit (101) and having a contact partner of the removable storage device with a second contact unit (113), wherein the first contact unit (101) and the second contact unit (113) are plugged into one another in a detachable manner in a contact state and are disconnected from one another in a disconnected state, wherein the first contact unit (101) is connected to the removable storage device (200) which has a housing (201) having an internal wall (202) and an outer side of the housing (201c), wherein on the outer side of the housing (201c) of the removable storage device (200), the first contact unit (101) is formed as a socket (102) which has a socket side wall (103) and a socket base (104), and the second contact unit (113) is connected to the contact partner of the removable storage device (200), wherein the housing (201) is formed by an upper shell (201a) and a lower shell (201b), which are connected to one another in a detachable manner, and the internal wall (202) forms an inner side of the outer side of the housing (201c), and wherein at least one energy cell (204) is arranged in the housing (201), wherein there is an electrical connection between the at least one energy cell (204) and the first contact unit (101), **characterized in that** an electronics board (208; 210) is attached in an energy-cell-free dead space (215) between the socket side wall (103) and the internal wall (202) of the housing (201) for electrically controlling the removable storage device (200).

2. The contact system according to Claim 1,
**characterized**
**in that** a contact board (107), which carries at least one contact element (110), is arranged in the socket (102).

3. The contact system according to Claim 2,
**characterized**
**in that** the contact board (107) is electrically connected via the electronics board (208; 210) to at least one energy cell (204) that is arranged in the removable storage device (200).

4. The contact system according to any one of Claims 1 to 3,
**characterized**
**in that** the electronics board (208; 210) is electrically connected to a connector board (210).

5. The contact system according to any one of Claims 1 to 4,
**characterized**
**in that** the electronics board (208; 210) comprises a battery management system board (208).

6. The contact system according to Claim 5,
**characterized**
**in that** the battery management system board (208) carries at least one set of battery management system electronics (209a; 209b).

7. The contact system according to any one of Claims 2 to 6,
**characterized**
**in that** the contact board (107) carries a plurality of asymmetrically arranged contact elements (110).

8. The contact system according to at least one of Claims 2 to 7,
**characterized**
**in that** in a socket base (104), at least one contact feedthrough opening (108) is formed, in which the at least one contact element (110) is attached.

9. The contact system according to any one of the preceding claims,
**characterized**
**in that** the second contact unit (113) forms a plug (114) which has a contact side (114a) with a plurality of plug contacts (116a; 116b; 116c).

10. The contact system according to Claim 9,
**characterized**
**in that** the plurality of plug contacts (116a; 116b; 116c) are arranged mirror-symmetrically on the contact side (114a).

11. The contact system according to Claim 9 or 10,
**characterized**
**in that** the plug (114) has a first and a second plug guide (115a; 115b) which in each case carry a plug transponder (118a; 118b) arranged in a mirror-inverted manner to the other.

12. The contact system according to any one of the preceding claims,
**characterized**
**in that** the electrical connection comprises an electrical board (208) and a connector board (210), wherein the connector board (210) is connected via one cell contact (211) in each case to one energy cell (204) in each case.

13. The contact system according to any one of the preceding claims,
**characterized**
**in that** the electrical board (208; 210) is a battery management system board (208).

14. The contact system according to Claim 13,
**characterized**
**in that** the battery management system board (208) carries at least one set of battery management system electronics (209a; 209b).

15. The contact system according to any one of the preceding claims,
**characterized**
**in that** the socket (102) is formed on an outer underside (207) of the housing (201).

## Revendications

1. Système de contact (100) avec un stockage amovible (200) avec une première unité de contact (101) et avec un partenaire de contact du stockage amovible avec une deuxième unité de contact (113), sachant que la première unité de contact (101) et la deuxième unité de contact (113), sont, dans un état de contact, connectées l'une dans l'autre de façon amovible et sont séparées l'une de l'autre dans un état de séparation, sachant que la première unité de contact (101) est reliée au stockage amovible (200), qui comporte un boîtier (201) avec une paroi intérieure (202) et un côté extérieur de boîtier (201c), sachant que la première unité de contact (101) est constituée sous la forme d'une douille (102) sur le côté extérieur de boîtier (201c) du stockage amovible (200), qui comporte une paroi latérale de boîtier (103) et un fond de douille (104) et la deuxième unité de contact (113) est reliée au partenaire de contact du stockage amovible (200),
sachant que le boîtier (201) est formé par une coque supérieure (201a) et une coque inférieure (201b), qui sont reliées entre elles de façon amovible et la paroi intérieure (202) constitue un côté intérieur du côté extérieur de boîtier (201c),
et sachant qu'au moins une cellule d'énergie (204) est disposée dans le boîtier (201), sachant qu'il y a une liaison électrique entre au moins une cellule d'énergie (204) et la première unité de contact (101),
**caractérisé en ce qu'**
une platine électronique (208, 210) est placée pour la commande électrique du stockage amovible (200) dans un espace mort (215) exempt de cellule d'énergie entre la paroi latérale de douille (103) et la paroi intérieure (202) du boîtier (201).

2. Système de contact selon la revendication 1,
**caractérisé en ce qu'**
une platine de contact (107) est disposée dans la douille (102), qui porte au moins un élément de contact (110).

3. Système de contact selon la revendication 2,
**caractérisé en ce que**
la platine de contact (107) est électriquement reliée à au moins une cellule d'énergie (204) disposée dans le stockage amovible (200) par le biais de la platine électronique (208, 210).

4. Système de contact selon l'une quelconque des revendications 1 à 3,
**caractérisé en ce que**
la platine électronique (208, 210) est électriquement reliée à une platine de raccord (210).

5. Système de contact selon l'une quelconque des revendications 1 à 4,
**caractérisé en ce que**
la platine électronique (208, 210) comprend une platine de système de gestion de batterie (208).

6. Système de contact selon la revendication 5,
**caractérisé en ce que**
la platine du système de gestion de batterie (208) porte au moins un système électronique de système de gestion de batterie (209a, 209b).

7. Système de contact selon l'une quelconque des revendications 2 à 6,
**caractérisé en ce que**
la platine de contact (107) porte une pluralité d'éléments de contact (110) disposés de façon asymétrique.

8. Système de contact selon l'une quelconque des revendications 2 à 7,
**caractérisé en ce qu'**
au moins une ouverture de passage de contact (108) est constituée dans un fond de douille (104), dans laquelle au moins un élément de contact (110) est placé.

9. Système de contact selon l'une quelconque des revendications précédentes,
**caractérisé en ce que**
la deuxième unité de contact (113) forme un connecteur (114), qui comporte un côté de contact (114a) avec une pluralité de contacts de connexion (116a, 116b, 116c).

10. Système de contact selon la revendication 9,
**caractérisé en ce que**
la pluralité des contacts de connexion (116a, 116b, 116c) est disposée en symétrie spéculaire sur le côté de contact (114a).

11. Système de contact selon la revendication 9 ou 10,
**caractérisé en ce que**
le connecteur (114) comporte un premier et un deuxième guide de connecteur (115a, 115b), qui portent respectivement un transpondeur de connecteur (118a, 118b) disposé inversé par rapport à l'autre.

12. Système de contact selon l'une quelconque des revendications précédentes,
**caractérisé en ce que**
la liaison électrique comprend une platine électrique (208) et une platine de raccord (210), sachant que la platine de raccord (210) est en liaison avec respectivement une cellule d'énergie (204) par le biais respectif d'un ressort cellulaire (211).

13. Système de contact selon l'une quelconque des revendications précédentes,
**caractérisé en ce que**
la platine électrique (208, 210) est une platine de système de gestion de batterie (208).

14. Système de contact selon la revendication 13,
**caractérisé en ce que**
la platine de système de gestion de batterie (208) porte au moins un système électronique de système de gestion de batterie (209a, 209b).

15. Système de contact selon l'une quelconque des revendications précédentes,
**caractérisé en ce que**
la douille (102) est constituée sur un côté inférieur (207) du boîtier (201).
